# EUROPÄISCHE PATENTSCHRIFT

(11) **EP 0 290 733 B1**
(45) Veröffentlichungstag und Bekanntmachung des Hinweises auf die Patenterteilung: **19.05.1993**
(21) Anmeldenummer: 88103442.5
(22) Anmeldetag: 05.03.1988
(51) Int. Cl.: G02B 21/08

(54) **Kombinierte Hellfeld-Dunkelfeld-Auflichtbeleuchtungseinrichtung**
Combined light and dark field direct illumination apparatus
Dispostif à éclairage incident pour éclairage fond clair et fond noir combiné

(30) Priorität: 05.05.1987 DE 3714830
(43) Veröffentlichungstag der Anmeldung: 17.11.1988
(73) Patentinhaber: Leica Industrieverwaltung GmbH, D-35530 Wetzlar (DE)
(72) Erfinder: Stankewitz, Hans-Werner, D-6330 Wetzlar 15-Steindorf (DE)

(56) Entgegenhaltungen:
- DE-A- 2 021 784
- DE-A- 2 542 075
- DE-A- 3 100 662
- DE-B- 1 267 966
- DE-C- 975 784
- FR-A- 2 433 767
- GB-A- 2 058 393
- US-A- 4 626 079

## Beschreibung

Die Erfindung betrifft eine kombinierte Hellfeld-Dunkelfeld-Auflichtbeleuchtungseinrichtung für mikroskopische Geräte mit einer in den Beleuchtungsstrahlengang wahlweise einbringbaren Einrichtung zur Unterdrückung des Hellfeldstrahlenbündels.

Bei Auflichtbeleuchtungseinrichtungen, die einen wahlweisen Wechsel zwischen einer Hellfeld- und einer Dunkelfeldauflichtbeleuchtung gestatten, wird zumindest ein Teil des Dunkelfeldstrahlenbündels parallel geführt. Bei dieser Abbildung nach Unendlich geht jedoch der äußere und der innere Teil des Strahlenbündels für die Ausleuchtung des Dunkelfeldes verloren. Dies führt zu einer ungleichmäßigen Objektausleuchtung, wobei zusätzlich eine Kontrastminderung durch das innere Strahlenbündel auftritt. Um die ungleichmäßige Objektausleuchtung weitgehend zu kompensieren, ist in der DE-OS 20 21 784 vorgeschlagen worden, die im Beleuchtungsstrahlengang angeordneten optischen Elemente mit einer zur Mitte hin abnehmenden Lichtdurchlässigkeit auszubilden. Dies führt jedoch zu einer unerwünschten Minderung der Gesamthelligkeit, was insbesondere bei großen Objektfeldern von Nachteil ist.

Ferner ist es aus der DE-OS 31 00 662 bekannt, den Dunkelfeld-Auflichtbeleuchtungsstrahlengang über Lichtfasern an das Objektfeld heranzuführen. Zwar kann dadurch eine ungleichmäßige Objektausleuchtung weitgehend vernachlässigt werden, jedoch auch hier muß durch die Lichtleitfasern eine Minderung der Gesamthelligkeit in Kauf genommen werden.

Aus der DE-A-2 542 075 ist ein Mikroskop mit einer kombinierten Auflicht-Beleuchtungseinrichtung für Hell- und Dunkelfeldbeleuchtung bekannt. Zur Realisierung der Dunkelfeldbeleuchtung wird das Hellfeldstrahlenbündel über einen Mittenstop ausgeblendet. Im Dunkelfeldstrahlengang sind ringförmige Linsen vorgesehen, mit denen die Aperturblende über eine Zwischenabbildung in der Objektebene fokussiert wird.

Darüber hinaus ist bereits in der DE-OS 29 25 407 eine Auflichtbeleuchtungseinrichtung beschrieben, die einen wahlweisen Wechsel zwischen der Hellfeld- und Dunkelfeldbeleuchtung gestattet. Der Wechsel wird über eine in den Hellfeldstrahlengang einbringbare rotationssymmetrische Lichttreppe durchgeführt, wobei die Beleuchtungsstrahlen in den Dunkelfeldstrahlengang umgelenkt werden. In diesem Dunkelfeldstrahlengang ist eine kombinierte Spiegel-Linsenanordnung vorgesehen, die das Bild der Leuchtfeldblendenebene um die Betrachtungsoptik herumführt und in die Objektebene abbildet. Durch die Verwendung einer derartigen Lichttreppe zum wahlweisen Wechsel zwischen der Hellfeld- und Dunkelfeldbeleuchtung kann wohl ein hoher Wirkungsgrad der Lichtquelle erreicht werden; dies stellt jedoch an die Positioniergenauigkeit der Lichttreppe extreme Anforderungen, so daß die Abbildung der Leuchtfeldblendenebene nur direkt ins Objekt möglich ist. Größere und helle Objektfelder können mit dieser bekannten Einrichtung im Dunkelfeldauflicht nicht gleichmäßig ausgeleuchtet werden.

Es ist daher Aufgabe der vorliegenden Erfindung, die Nachteile der bekannten Anordnungen zu vermeiden und den Dunkelfeld-Auflichtbeleuchtungsstrahlengang derart auszubilden, daß ein unproblematischer Wechsel zwischen der Hellfeld- und Dunkelfeldbeleuchtung gewährleistet ist und große Objektfelder ohne Verlust der Gesamthelligkeit gleichmäßig im Dunkelfeld-Auflicht beleuchtet werden können.

Diese Aufgabe wird erfindungsgemäß durch den kennzeichnenden Teil des Anspruchs 1 gelöst. Vorteilhafte Weiterbildungen sind Gegenstand der Unteransprüche.

In der Zeichnung ist die Erfindung in einem Ausführungsbeispiel schematisch dargestellt. Es zeigen:
- Fig. 1: eine Auflichtbeleuchtungseinrichtung in der Wirkstellung Dunkelfeld;
- Fig. 2: ein erstes als Linsenkranz ausgebildetes ringförmiges optisches Element aus der Blickrichtung des Ringspiegels;
- Fig. 2a: das ringförmige optische Element und eine Linse als einheitliches Bauelement in perspektivischer Darstellung;
- Fig. 2b: eine einzelne Linsenkranzfläche des in Fig. 2 dargestellten optischen Elementes;
- Fig. 3: ein zweites als Linsenkranz ausgebildetes ringförmiges optisches Element aus der Blickrichtung des Ringspiegels;
- Fig. 3a: eine einzelne Linsenkranzfläche des zweiten ringförmigen optischen Elementes;
- Fig. 4: eine weitere Variante in der Ausbildung der optisch wirksamen Flächen der ringförmigen optischen Elemente.

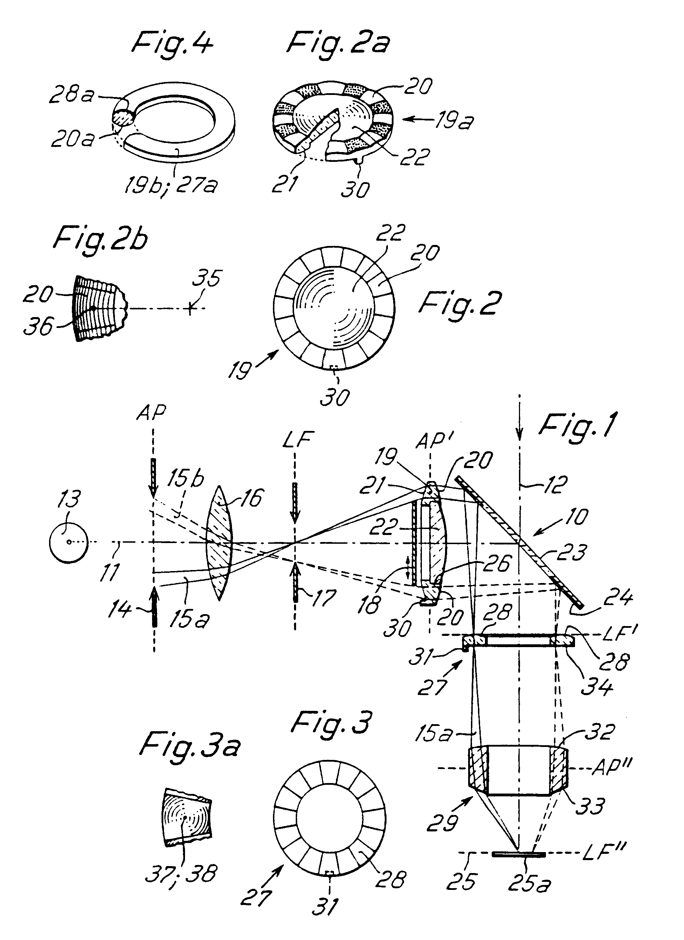

Die Fig. 1 zeigt eine kombinierte Hellfeld-Dunkelfeld-Auflichtbeleuchtungseinrichtung 10 für ein Mikroskop mit einem Beleuchtungsstrahlengang 11 und einem senkrecht dazu angeordneten Beobachtungsstrahlengang 12. Der Beleuchtungsstrahlengang 11 weist, ausgehend von einer Lichtquelle 13, eine in der Aperturebene AP angeordnete regelbare Aperturblende 14, zwei von der Aperturebene AP ausgehende Dunkelfeldstrahlenbündel 15a,15b, eine erste Sammellinse 16, eine in der Leuchtfeldblendenebene LF angeordnete regelbare Blende 17, eine schwenkbare Stoppeinrichtung 18 und ein erstes, als Linsenkranz ausgebildetes, ringförmiges optisches Element 19 mit einer konvex gekrümmten Lichteingangsfläche 21 und konvexen Linsenkranzflächen 20 auf. Dieses erste ringförmige optische Element 19 hat in seinem Ringinneren eine Ausnehmung 26 zur Aufnahme einer für die Hellfeldbeleuchtung wirksamen zweiten Sammellinse 22. Zur Beleuchtungsstrahlumlenkung ist ein unter 45° zum Beleuchtungsstrahlengang 11 angeordneter, an sich bekannter teildurchlässiger Ringspiegel 23 vorgesehen, so daß Beleuchtungsstrahlen von der Lichtquelle 13 in die Objektebene 25 umgelenkt werden und Lichtstrahlen aus der Objektebene 25 entlang des Beobachtungsstrahlenganges 12 durchgelassen werden. An seiner der Objektebene 25 zugewandten äußeren Fläche 24 ist der Ringspiegel 23 für die Umlenkung der Dunkelfeldbeleuchtungsstrahlen 15a,15b vollverspiegelt ausgebildet. Im weiteren Verlauf des Beobachtungsstrahlengangs 12 ist ein zweites ringförmiges, als Linsenkranz ausgebildetes optisches Element 27 mit konvexen Linsenkranzflächen 28 und einer plan ausgebildeten Lichtaustrittsfläche 34 angeordnet. Weiterhin ist im Strahlengang 12 ein drittes ringförmiges optisches Element 29 als Ringlinse mit einer torisch-konvexen Lichteintrittsfläche 32 und einer torisch-konkaven Lichtaustrittsfläche 33 vorgesehen. Es soll bereits hier darauf hingewiesen werden daß selbstverständlich an Stelle der Ringlinse 29 auch ein Ringspiegel Verwendung finden kann.

Von der Lichtquelle 13 wird mit einer nicht dargestellten Linsenanordnung in der Aperturebene AP ein Zwischenbild der Lichtquelle 13 erzeugt. Die erste Sammellinse 16 ist so angeordnet, daß die Leuchtfeldblendenebene LF gleichmäßig ausgeleuchtet und ein Zwischenbild AP′ der Aperturebene AP erzeugt wird. In oder in der Nähe dieser Ebene AP′ ist das erste ringförmige optische Element 19 mit der zweiten Sammellinse 22 angeordnet. Zur Ausblendung des Hellfeldstrahlenbündels wird in der Wirkstellung Dunkelfeld vor dieser zweiten Sammellinse 22 die schwenkbare Stoppeinrichtung 18 in den Beleuchtungsstrahlengang 11 eingebracht. Das erste ringförmige optische Element 19 fokussiert die Dunkelfeldstrahlen 15a,15b über den Ringspiegel 23 um die Achse des Beobachtungsstrahlengangs 12 in die Nähe des zweiten ringförmigen optischen Elements 27 zu einem Zwischenbild LF′ der Leuchtfeldblendenebene LF. Dieses zweite ringförmige optische Element 27 fokussiert das Zwischenbild der Aperturebene AP′ in eine konjugierte Ebene AP˝, in der die Ringlinse 29 angeordnet ist. Zur Beleuchtung des Dunkelfeldes erzeugt die Ringlinse 29 in der Objektebene 25 eine zweite zur Leuchtfeldblende 17 konjugierte Ebene LF˝.

Die Figur 1 zeigt durch den Verlauf des Dunkelfeldstrahlenbündels 15b, dessen Ausgangspunkt in der Aperturebene bzw. Leuchtfeldblendenebene außerhalb der Papierebene liegt, daß auch windschief auf die optischen Elemente (hier: 27) treffende Beleuchtungsstrahlen zur Ausleuchtung des Dunkelfeldes in der Objektebene 25 genutzt werden.

In der Figur 2 wird das erste als Linsenkranz ausgebildete ringförmige optische Element 19 mit den einzelnen Linsenkranzflächen 20 aus der Blickrichtung des Ringspiegels 23 dargestellt. In der Mitte dieses optischen Elements 19 ist die zweite Sammellinse 22 angeordnet. Eine Nase 30 ist am Rand des optischen Elements 19 zu dessen vereinfachter Ausrichtung im Beleuchtungsstrahlengang 11 vorgesehen.

Die Figur 2a zeigt das ringförmige optische Element 19 mit der im Ringinneren angeordneten Sammellinse 22 als einstückiges Bauelement 19a in perspektivischer Darstellung. Diese Ausgestaltung hat insbesondere den Vorteil, daß der Fertigungsaufwand für die Ausnehmung 26 (Fig. 1), die Verkittung und Zentrierung der Sammellinse 22 entfällt. Die Herstellung eines solchen Bauelements 19a kann im Spritzverfahren unter Verwendung eines geeigneten Kunststoffes erfolgen. Dabei ist es in vorteilhafter Weise möglich, die Form zur Herstellung eines solchen Elementes mit einem Linsenkranz so auszugestalten, daß unter Beibehaltung des Linsenkranzes die zweite optisch wirksame Fläche variiert wird. Mit geringstmöglichem Aufwand können somit die optischen Eigenschaften eines derartigen Elementes verändert werden. In der Fig. 2a wird auch dargestellt, daß das optische Element 19a nur einseitig die Linsenkranzfläche 20 aufweist, wobei die Lichteintrittsfläche 21 des optischen Elementes 19a mit einer gekrümmten Oberfläche ausgestaltet ist. Ferner ist hier durch die Schraffur einzelner Linsenkranzflächen 20 angedeutet, daß das ringförmige optische Element 19a eine unterschiedliche optische Dichte oder eine unterschiedliche spektrale Durchlässigkeit aufweist. Somit können beispielsweise zusätzliche Farb- oder Graufilter o.ä. im Beleuchtungsstrahlengang entfallen.

In Figur 2b ist die Ausgestaltung der Oberfläche einer einzelnen Linsenkranzfläche 20 des ringförmigen optischen Elementes 19 aus der Blickrichtung des Ringspiegels dargestellt. Durch die Schraffur wird deutlich, daß der geometrische Scheitelpunkt 35 dieser sphärischen Fläche 20 außerhalb des Flächenmittelpunktes 36 liegt.

Die Figur 3 zeigt analog zu Fig. 2 das zweite als Linsenkranz ausgebildete ringförmige optische Element 27 mit den einzelnen plankonvexen Linsenkranzflächen 28 aus der Blickrichtung des Ringspiegels 19. Auch hier ist am Rand eine Nase 31 in gleicher Stellung zum ersten ringförmigen optischen Element 19 vorgesehen. Neben der Justage im Beobachtungsstrahlengang 12 wird somit auch eine genaue Ausrichtung der einzelnen Linsenkranzflächen 20,28 der beiden ringförmigen optischen Elemente 19,27 aufeinander vereinfacht.

In der Figur 3a ist eine einzelne Linsenkranzfläche 28 des ringförmigen optischen Elementes 27 aus der Blickrichtung des Ringspiegels 23 dargestellt. Die sphärische Fläche 28 ist (im Vergleich zur Fig. 2b) derart ausgebildet, daß der geometrische Scheitelpunkt 37 mit dem Flächenmittelpunkt 38 zusammenfällt.

Die Figur 4 zeigt eine weitere Variante in der Ausbildung der optisch wirksamen Flächen der ringförmigen Elemente 19b,27a in perspektivischer Darstellung. Die Flächen 20a,28a des Elementes 19b, 27a stellen in ihrer Geometrie einen Teil eines Reifens dar. Derartig ausgebildete Reifenlinsen 19b,27a sind noch wirtschaftlicher herstellbar, weisen jedoch in ihrer Verwendung im Strahlengang 11, 12 und der Anordnung in der Ebene AP′ 19b bzw. LF′ 27a der Fig. 1 den Nachteil auf, daß windschief auftreffende Beleuchtungsstrahlen zumindest teilweise für die Ausleuchtung des Dunkelfeldes verloren gehen.

Mit der erfindungsgemäßen Einrichtung ist bei vergleichsweise gleichgroßem Objektfeld eine höhere Beleuchtungsapertur abbildbar bzw. kann bei gleicher Apertur ein größeres Objektfeld ausgeleuchtet werden. Ferner ist bei der Verwendung einer nach Unendlich abbildenden Optik ein größerer Abstand Ringspiegel - Objektfeld möglich, wobei Raum für zusätzliche mikroskopische Einrichtungen geschaffen wird. Durch die spezielle Ausbildung und Anordnung der ringförmigen optischen Elemente werden auch windschief von der Leuchtfeldblendenebene ausgehende Dunkelfeldbeleuchtungsstrahlen in die Objektebene abgebildet.

### Bezugszeichenliste

- 10: kombinierte Hellfeld-Dunkelfeld-Auflichtbeleuchtungseinrichtung
- 11: Beleuchtungsstrahlengang
- 12: Beobachtungsstrahlengang
- 13: Lichtquelle
- 14: Aperturblende
- 15a: Dunkelfeldstrahlenbündel
- 15b: Dunkelfeldstrahlenbündel
- 16: erste Sammellinse
- 17: Leuchtfeldblende
- 18: Stoppeinrichtung
- 19: erstes ringförmiges optisches Element
- 19a: einstückiges Bauelement aus (19) und (22)
- 19b: Reifenlinse
- 20: konvexe Linsenkranzabschnitte
- 20a: optisch wirksame Flächen von (19b)
- 21: Lichteintrittsfläche von (19)
- 22: zweite Sammellinse
- 23: Ringspiegel
- 24: außenliegende Fläche von (23)
- 25: Objektebene
- 25a: Objekt
- 26: Ausnehmung an (19)
- 27: zweites ringförmiges optisches Element
- 27a: Reifenlinse
- 28: konvexe Linsenkranzabschnitte
- 28a: optisch wirksame Flächen von (27a)
- 29: drittes ringförmiges optisches Element (Ringlinse)
- 30: Nase an (19)
- 31: Nase an (27)
- 32: torisch-konvexe Lichteintrittsfläche an (29)
- 33: torisch-konkave Lichtaustrittsfläche an (29)
- 34: plane Lichtaustrittsfläche an (27)
- 35: geometrischer Scheitelpunkt von (20)
- 36: Flächenmittelpunkt von (20)
- 37: geometrischer Scheitelpunkt von (28)
- 38: Flächenmittelpunkt von (28)
- AP: Aperturebene
- AP': erstes Zwischenbild der Aperturebene
- AP'': zweites Zwischenbild der Aperturebene
- LF: Leuchtfeldblendenebene
- LF': erstes Zwischenbild der Leuchtfeldblendenebene
- LF'': zweites Zwischenbild der Leuchtfeldblendenebene

## Patentansprüche

1. Kombinierte Hellfeld-Dunkelfeld-Auflichtbeleuchtungseinrichtung für mikroskopische Geräte mit einer in den Beleuchtungsstrahlengang wahlweise einbringbaren Einrichtung zur Unterdrückung des Hellfeldstrahlenbündels, **dadurch gekennzeichnet,** daß zur Abbildung einer gleichmäßig ausgeleuchteten Fläche, nämlich die der Leuchtfeldblendenebene (LF), über mindestens ein Zwischenbild (LF') in die Objektebene (25) im Dunkelfeldstrahlengang (11) mindestens drei ringförmig ausgebildete optische Elemente (19; 19a; 19b; 27; 27a; 29) vorgesehen sind, wobei
a) das erste ringförmige optische Element (19; 19a; 19b) in oder in der Nähe einer zur Aperturebene (AP) konjugierten Ebene (AP') angeordnet ist und die Leuchtfeldblendenebene (LF) zu einem Zwischenbild (LF') fokussiert,
b) das zweite ringförmige optische Element (27; 27a) in oder in der Nähe des Zwischenbildes (LF') der Leuchtfeldblendenebene (LF) angeordnet ist und das Zwischenbild der Aperturebene (AP') in einer zweiten zur Aperturebene konjugierten Ebene (AP'') fokussiert und
c) das dritte ringförmige optische Element (29) als Ringspiegel oder Ringlinse ausgebildet ist und in oder in der Nähe der zweiten zur Aperturebene konjugierten Ebene (AP'') angeordnet ist und das Zwischenbild (LF') der Leuchtfeldblendenebene (LF) in einer zweiten zur Leuchtfeldblendenebene konjugierten Ebene (LF'') fokussiert.

2. Einrichtung nach Anspruch 1, **dadurch gekennzeichnet,** daß mindestens eines der ringförmigen optischen Elemente (19;19a,27) einen Linsenkranz aufweist, der einzelne nebeneinander angeordnete gekrümmte Flächen (20;28) enthält.

3. Einrichtung nach Anspruch 2, **dadurch gekennzeichnet,** daß die eine optisch wirksame Fläche als Linsenkranz und die zweite gekrümmt (21) oder plan (34) ausgebildet ist (Fig. 1).

4. Einrichtung nach Anspruch 2 oder 3, **dadurch gekennzeichnet,** daß das erste ringförmige optische Element (19;19a) gegenüber dem zweiten ringförmigen optischen Element (27) ein geradzahliges Vielfaches von Linsenkranzflächen (20;28) aufweist.

5. Einrichtung nach einem der Ansprüche 1 bis 4, **dadurch gekennzeichnet,** daß mindestens eine der optisch wirksamen Flächen (20; 20a, 21, 28; 28a, 32, 33) der ringförmigen optischen Elemente (19; 19a; 19b, 27; 27a, 29) sphärisch oder asphärisch oder torisch ausgebildet ist.

6. Einrichtung nach einem der Ansprüche 2 bis 4**, dadurch gekennzeichnet,** daß der Linsenkranz der ringförmigen optischen Elemente (19;19a,27) eine Kombination aus sphärischen und/oder asphärischen und/oder torischen Linsenkranzflächen aufweist.

7. Einrichtung nach Anspruch 5 oder 6, **dadurch gekennzeichnet,** daß die sphärisch gekrümmte Fläche derart ausgebildet ist, daß deren geometrischer Scheitelpunkt (35) versetzt zum Flächenmittelpunkt (36) angeordnet ist (Fig. 2b).

8. Einrichtung nach einem der vorherigen Ansprüche, **dadurch gekennzeichnet,** daß das dritte ringförmige optische Element (29) als Ringlinse mit einer torisch konvexen (32) und einer torisch konkaven (33) Fläche ausgebildet ist.

9. Einrichtung nach mindestens einem der vorherigen Ansprüche **dadurch gekennzeichnet,** daß das erste optische Element (19) in seinem Ringinneren eine Ausnehmung (26) zur Aufnahme einer Linse (22) aufweist.

10. Einrichtung nach mindestens einem der vorherigen Ansprüche, **dadurch gekennzeichnet,** daß das optische Element (19) in seinem Ringinnern eine Linse (22) aufweist und das optische Element (19) mit der Linse (22) als einstückiges Bauelement (19a) ausgebildet ist (Fig. 2a).

11. Einrichtung nach mindestens einem der vorherigen Ansprüche, **dadurch gekennzeichnet,** daß die optischen Elemente (19;19a,27,29) derart aufeinander ausgerichtet im Beleuchtungsstrahlengang (11) angeordnet sind, daß sie auch windschiefe Beleuchtungsstrahlen (15b) in die Objektebene (25) abbilden.

12. Einrichtung nach mindestens einem der vorhergehenden Ansprüche, **dadurch gekennzeichnet,** daß einzelne Linsen der Linsenkranzflächen (20,28) von mindestens einem optischen Element (19;19a,27) eine unterschiedliche optische Dichte und/oder eine unterschiedliche spektrale Durchlässigkeit aufweisen (Fig. 2a).

## Claims

1. Combined bright and dark field incident illumination equipment for microscope instruments and with an equipment which is selectably introducible into the illumination ray path for the suppression of the bright field beam, characterised thereby, that at feast three annularly formed optical elements (19; 19a; 19b; 27; 27a; 29) are provided in the dark field ray path (11) for the imaging of an uniformly illuminated area, namely that of the light field stop plane (LF), by way of at least one intermediate image (LF') into the object plane, wherein
a) the first annular optical element (19; 19a; 19b) is arranged in or near to a plane (AP') conjugate with the aperture plane (AP) and the light field stop plane (LF) focusses into an intermediate image (LF'),
b) the second annular optical element (27; 27a) is arranged in or near to the intermediate image (LF') of the light field stop plane (LF) and focusses the intermediate image of the aperture plane (AP') in a second plane (AP'') conjugate with the aperture plane and
c) the third annular optical element (29) is formed as annular mirror or as annular lens and is arranged in or near to the second plane (AP'') conjugate with the aperture plane and focusses the intermediate image (LF') of the light field stop plane (LF) in a second plane (LF'') conjugate with the light field stop plane.

2. Equipment according to claim 1, characterised thereby, that at least one of the annular optical elements (19; 19a, 27) displays a lens disc which contains individual curved surfaces (20; 28) arranged one beside the other.

3. Equipment according to claim 2, characterised thereby, that the one optically effective surface is constructed as lens disc and the second is formed to be curved (21) or planar (34) (Figure 1).

4. Equipment according to claim 2 or 3, characterised thereby, that the first annular optical element (19; 19a) displays lens disc surfaces (20; 28), which are an even-numbered multiple of those of the second annular optical element (27).

5. Equipment according to one of the claims 1 to 4, characterised thereby, that at least one of the optically effective surfaces (20; 20a, 21, 28; 28a; 32; 33) of the annular optical elements (19; 19a; 19b; 27; 27a; 29) is constructed to be spherical or aspherical or toric.

6. Equipment according to one of the claims 2 to 4, characterised thereby, that the lens disc of the annular optical elements (19; 19a; 27) display a combination of spherical and/or aspherical and/or toric lens disc surfaces.

7. Equipment according to claim 5 or 6, characterised thereby, that the spherically curved surface is formed in such a manner that its geometric apex (35) is arranged to be displaced from the centre (36) of area (Figure 2b).

8. Equipment according to one of the preceding claims, characterised thereby, that the third annular optical element (29) is formed as annular lens with a torically convex (32) or a torically concave (33) surface.

9. Equipment according to at least one of the preceding claims, characterised thereby, that the first optical element (19) in its annular interior displays a recess (26) for the reception of a lens (22).

10. Equipment according to at least one of the preceding claims, characterised thereby, that the optical element (19) in its annular interior displays a lens (22) and the optical element (19) is formed as a component (19a) integral with the lens (22) (Figure 2b).

11. Equipment according to at least one of the preceding claims, characterised thereby, that the optical elements (19; 19a, 27, 29) are arranged so oriented one relative to the other in the illumination ray path (11) that they also image skew illumination rays (15b) into the object plane (25).

12. Equipment according to at at least one of the preceding claims, characterised thereby, that individual lenses of the lens disc surfaces (20, 28) of at least one optical element (19; 19a, 27) have a different optical thickness and/or a different spectral permeability (Fig. 2a).

## Revendications

1. Dispositif à éclairage incident pour éclairage fond clair et fond noir combiné pour des appareils microscopiques avec un dispositif pouvant être inséré sélectivement dans le faisceau d'éclairage pour supprimer le faisceau de rayons à fond clair, caractérisé en ce que sont prévus pour la représentation d'une surface éclairée régulièrement, à savoir le plan du diaphragme limitant de champ lumineux (LF), par au moins une image intermédiaire (LF') dans le plan de l'objet (25) dans le faisceau d'éclairage à fond noir (11) au moins trois éléments optiques de forme annulaire (19; 19a; 19b; 27; 27a; 29).
a) le premier élément optique de forme annulaire (19; 19a; 19b) étant disposé dans ou à proximité d'un plan (AP') conjugué au plan d'ouverture (AP) et focalise le plan de diaphragme limitant de champ lumineux (LF) en une image intermédiaire (LF'),
b) le deuxième élément optique de forme annulaire (27; 27a) étant disposé dans ou à proximité de l'image intermédiaire (LF') du plan de diaphragme limitant de champ lumineux (LF) et focalise l'image intermédiaire du plan d'ouverture (AP') dans un deuxième plan (AP'') conjugué au plan d'ouverture et
c) le troisième élément optique de forme annulaire (29) étant réalisé comme miroir annulaire ou lentille annulaire et est disposé dans ou à proximité du deuxième plan (AP'') conjugué au plan d'ouverture, et focalise l'image intermédiaire (LF') du plan de diaphragme limitant de champ lumineux (LF) dans un deuxième plan (LF'') conjugué au plan de diaphragme limitant de champ lumineux.

2. Dispositif selon la revendication 1, caractérisé en ce qu'au moins l'un des éléments optiques de forme annulaire (19; 19a; 27) présente une couronne de lentilles qui contient des surfaces individuelles courbées (20; 28) disposées les unes à côté des autres.

3. Dispositif selon la revendication 2, caractérisé en ce qu'une surface active optiquement est réalisée sous forme de couronne de lentilles et la deuxième de façon courbée (21) ou plane (34) (figure 1).

4. Dispositif selon la revendication 2 ou 3, caractérisé en ce que le premier élément optique de forme annulaire (19; 19a) présente par rapport au deuxième élément optique annulaire (27) un multiple de nombre paire de surfaces de couronnes de lentilles (20; 28).

5. Dispositif selon l'une des revendications 1 à 4, caractérisé en ce qu'au moins l'une des surfaces actives optiquement (20; 20a, 21, 28; 28a, 32, 33) des éléments optiques de forme annulaire (19; 19a; 19b, 27; 27a, 29) est réalisée sous forme sphérique ou non-sphérique ou torique.

6. Dispositif selon l'une des revendications 2 à 4, caractérisé en ce que la couronne de lentilles des éléments optiques de forme annulaire 19; 19a, 27) présentent une combinaison de surfaces de couronnes de lentilles sphériques et/ou non-sphériques et/ou toriques.

7. Dispositif selon la revendication 5 ou 6, caractérisé en ce que la surface courbée sphérique est réalisée de telle sorte que l'apex géométrique de celle-ci (35) est disposé de façon décalée par rapport au centre de surface (36) (figure 2b).

8. Dispositif selon l'une des revendications précédentes, caractérisé en ce que le troisième élément optique de forme annulaire (29) est réalisé sous forme de lentille annulaire avec une surface convexe torique (32) et une surface concave torique (33).

9. Dispositif selon au moins l'une des revendications précédentes, caractérisé en ce que le premier élément optique (19) présente dans son intérieur d'anneau un évidement (26) pour la réception d'une lentille (22).

10. Dispositif selon au moins l'une des revendications précédentes, caractérisé en ce que l'élément optique (19) présente dans son intérieur d'anneau une lentille (22), et en ce que l'élément optique (19) avec la lentille (22) est réalisé sous forme d'un composant en une pièce (19a) (figure 2a).

11. Dispositif selon au moins l'une des revendications précédentes, caractérisé en ce que les éléments optiques (19, 19a, 27, 29) sont disposés de façon orientée l'un vers l'autre dans le faisceau d'éclairage (11) qu'ils représentent également des rayons d'éclairage (15b) gauches dans le plan de l'objet (25).

12. Dispositif selon au moins l'une des revendications précédentes, caractérisé en ce que les différentes lentilles des surfaces de couronnes de lentilles (20, 28) d'au moins un élément optique (19, 19a, 27) présentent une densité optique différente et/ou une perméabilité spectrale différente (figure 2a).
